# FASCICULE DE BREVET EUROPEEN

(11) **EP 1 903 073 B1**
(45) Date de publication et mention de la délivrance du brevet: **09.12.2015**
(21) Numéro de dépôt: 07291103.5
(22) Date de dépôt: 14.09.2007
(51) Int. Cl.: C08L 23/10, C08L 23/16, C08L 23/22

(54) **MATÉRIAU THERMOPLASTIQUE POUR LA FABRICATION D'ARTICLES TUBULAIRES SOUPLES PRÉSENTANT AU MOINS UNE SOUDURE**
THERMOPLASTISCHES MATERIAL ZUR HERSTELLUNG VON FLEXIBLEN ROHRARTIKELN, DIE MINDESTENS EINE NAHT AUFWEISEN
THERMOPLASTIC MATERIAL FOR MANUFACTURING FLEXIBLE TUBULAR ARTICLES HAVING AT LEAST ONE WELD

(30) Priorité: 19.09.2006 FR 0608200
(43) Date de publication de la demande: 26.03.2008
(73) Titulaire: Cep Tubes, 63550 Saint Remy Sur Durolle (FR)
(72) Inventeur: Dambricourt, Géry Bernard Marie Cornil, 63300 Escoutoux (FR); Bourdier, Alain, 63350 Crevant Laveine (FR)
(74) Mandataire: Novagraaf Technologies

(56) Documents cités:
- EP-A1- 1 614 699
- FR-A1- 2 850 362
- FR-A1- 2 850 363
- US-A- 5 472 792

## Description

La présente invention concerne, de façon générale, les matériaux de type polymère utilisés pour la fabrication d'emballages sous forme de tubes souples présentant au moins une soudure, qui sont traditionnellement utilisés pour le conditionnement de produits tels que les dentifrices, les crèmes alimentaires ou cosmétiques, les colles ou les mastics.

Dans la fabrication des tubes souples par un procédé d'injection, lorsque la paroi du tube est constituée d'un polymère ou d'un mélange de polymère à base de polypropylène, on utilise généralement des polymères hétérophasiques comprenant une matrice polymère à base de polypropylène et/ou un copolymère de propylène, et des nodules de caoutchouc d'éthylène-propylène (ou EPR). Pour obtenir la souplesse requise pour l'utilisation des tubes souples, et compte tenu de l'épaisseur de la paroi des tubes réalisés par injection, on utilise des polypropylènes qui présentent un module de flexion variant de 100 à 600 MPa selon la norme ISO 178, donc chargés en nodules EPR.

Toutefois, la présence des nodules EPR crée un risque de séparation des phases lors de la soudure de la paroi du tube. Cette séparation des phases est matérialisée par l'apparition d'un blanchissement au niveau de la zone soudée, ainsi qu'une diminution de la résistance de la soudure dans cette zone. Il en résulte une mauvaise qualité de la soudure.

EP A 1 614 699 et US A 5 472 792 décrivent des compositions flexible à base de polypropylène et d'un copolymère de propylène et de butène.

Le but de la présente invention est donc de proposer un matériau thermoplastique utilisable pour la fabrication par injection de tubes souples permettant de pallier ces inconvénients.

Les tubes réalisés dans le matériau de l'invention peuvent être soudés après remplissage sur les lignes de fabrication équipées d'un procédé de soudure dit procédé de « buse à air chaud », qui est un procédé couramment répandu actuellement.

De façon surprenante, la demanderesse a découvert que le mélange d'un tel polymère hétérophasique avec un copolymère de polypropylène et de butène, et optionnellement d'une autre α-oléfine en C₂-C₈, permet de fabriquer un matériau qui améliore de manière significative la tenue de la soudure de la paroi d'un tube réalisé en ce matériau.

Plus particulièrement, la demanderesse a constaté de façon étonnante que la présence d'un copolymère de polypropylène et de butène dans la composition d'un matériau thermoplastique contenant un polymère hétérophasique du type précédemment cité permet de limiter la séparation des phases dans le matériau, en nivelant les différences de comportement de la matrice de base et des nodules à la fusion et, plus particulièrement à la solidification lors de la soudure de la paroi.

La présente invention a donc pour objet de fournir un matériau thermoplastique utilisable pour la fabrication par injection de tubes souples présentant au moins une soudure, ce matériau étant constitué au moins d'un polymère hétérophasique présentant d'un module de flexion selon la norme ISO 178 de 100 à 600 MPa et comprenant une matrice polymère à base de polypropylène et/ou un copolymère du propylène, et des nodules de caoutchouc d'éthylène-propylène, caractérisé en ce qu'il comporte en outre un copolymère de propylène et de butène, et optionnellement d'une autre α-oléfine en C₂-C₈.

Le matériau thermoplastique selon l'invention présente des propriétés thermiques particulières qui peuvent être mises en évidence par une analyse calorimétrique différentielle (ou DSC : « Differential Scanning Calorimetry »). En particulier, l'analyse DSC du matériau thermoplastique selon l'invention met en évidence un évènement endothermique correspondant à une fusion/ramollissement qui intervient à une température comprise entre 130 et 150°C, alors que ce phénomène intervient à une température bien supérieure, entre 162 et 170°C, dans un polypropylène. Or, cet évènement endothermique se situe, pour le matériau thermoplastique de l'invention, dans la gamme de variation de la température de fusion de l'EPR, également compris entre 130 et 150°C. De ce fait, les différences de comportement du matériau thermoplastique selon l'invention sont très atténuées lors de l'opération de soudure, et plus particulièrement en phase de solidification, limitant ainsi le risque de séparation des différentes phases du matériau thermoplastique.

A titre de polymères hétérophasiques présentant un module de flexion de 100 à 600 MPa utilisables selon la présente invention, on peut notamment citer les copolymères de propylène-ethylène hétérophasiques statistiques, comme par exemple le produit commercialisé par la société BOREALIS sous la dénomination commerciale Borsoft^{™} SF 203 CF.

A titre de copolymère de propylène-butène utilisable selon la présente invention, on peut notamment citer le produit commercialisé par la société Basell sous la dénomination commerciale Adsyl 5 C 30 F

Le copolymère de propylène-butène peut être un terpolymère de propylène-éthylène-butène.

A titre de terpolymère du propylène-éthylène-butène selon la présente invention, on peut notamment citer le produit commercialisé par la société BOREALIS sous la dénomination commerciale Borseal^{™} TD218BF.

La proportion de polymère hétérophasique et de copolymère de propylène-butène dans le matériau thermoplastique selon l'invention a une influence sur la tenue de la soudure et la souplesse de la paroi des tubes réalisés avec le matériau thermoplastique selon l'invention.

De manière avantageuse; le copolymère de propylène et de butène représente de 10% à 50% en poids du matériau de l'invention. Il est préférable que la proportion du copolymère de propylène et de butène dans le matériau thermoplastique selon l'invention soit inférieure à 50% en poids pour conserver le degré de souplesse requis.

Si le copolymère de propylène et de butène représente au moins 15% en poids du matériau thermoplastique, on observe une nette amélioration du comportement de celui-ci lors d'un traitement thermique de soudure. Pour obtenir un comportement idéal du matériau thermoplastique selon l'invention lors de la soudure, il est préférable que la proportion du copolymère de propylène et de butène soit comprise entre 15 à 33%, et mieux, de l'ordre de 20% en poids de ce matériau.

Selon un mode de réalisation particulièrement avantageux, le matériau thermoplastique de la présente invention comporte un mélange de deux polymères hétérophasiques comprenant chacun une matrice polymère à base de polypropylène et/ou un copolymère du propylène, et des nodules de caoutchouc d'éthylène-propylène :
- le premier polymère hétérophasique présentant un module de flexion d'au moins 300 MPa, de préférence de l'ordre de 400 MPa, et
- le deuxième polymère hétérophasique présentant un module de flexion de 70 MPa à 100 MPa, de préférence d'environ 80 MPa.

A titre de deuxième polymère hétérophasique présentant un module de flexion de 70 MPa à 100 MPa, on peut notamment citer les polyoléfines thermoplastiques commercialisées pas la société Basell sous les dénominations commerciales *Hifax* CA 60 A et *Adflex* X 100G.

De manière avantageuse, le premier polymère hétérophasique intervient dans le matériau thermoplastique selon la présente invention à raison de 40 à 80 % en poids, de préférence à raison d'environ 55 % en poids du matériau thermoplastique, tandis que le deuxième polymère hétérophasique intervient à raison de 0 à 40 % en poids, et de préférence à raison d'environ 25 % en poids du matériau thermoplastique.

Enfin, la présente invention a également pour objet un tube souple réalisé en un matériau thermoplastique selon l'invention. Le tube souple selon l'invention peut notamment être utilisé pour le conditionnement de produits tels que des crèmes cosmétiques, des dentifrices, des crèmes alimentaires, des colles, etc.

Le tube souple selon l'invention peut être réalisé par le procédé de fabrication décrit dans FR 2850363 et FR 2850362. Le tube souple selon l'invention peut avantageusement présenter une structure conforme à celles décrites dans FR2850363 et FR2850362.

La présente invention sera mieux illustrée à l'aide des exemples comparatifs suivants. Les quantités sont indiquées en pourcentages en poids, sauf mention contraire.

### EXEMPLES

### • Produits :

- polyéthylène commercialisé par la société DOW sous la dénomination commerciale DOWLEX 2035.
- copolymère Ethylène Ethyl Acrylate commercialisé par la société DuPont sous la dénomination commerciale Elvaloy^{®} 2715 AC,
- polybutène-1 commercialisé par la société BASELL sous la dénomination commerciale DP 8510,
- copolymère de propylène-ethylène hétérophasique commercialisé par la société BOREALIS sous la dénomination commerciale Borsoft^{™} SF203CF,
- polyoléfine thermoplastique (polypropylène hétérophasique) commercialisée par la société Basell sous la dénomination commerciale *Hifax* CA 60 A,
- polyoléfine thermoplastique (polypropylène hétérophasique) commercialisée par la société Basell sous la dénomination commerciale *Adflex* X 100G,
- copolymère de propylène-butène commercialisé par la société Basell sous la dénomination commerciale Adsyl 5 C 30 F,
- terpolymère de propylène-éthylène-butène commercialisé par la société BOREALIS sous la dénomination commerciale Borseal^{™} TD218BF.

### • Préparation des échantillons :

On a préparé 5 échantillons de tubes témoins T1 à T5, et qui sont réalisés en un matériau de l'art antérieur, dont la composition pondérale est indiquée dans le tableau 1 :

**Tableau 1**

| | **Composition** | |
|---|---|---|
| **échantillons** | **produits** | **Quantité (%)** |
| T1 | - polyéthylène | - 100 |
| T2 | - Borsoft^{™} SF203 CF | - 67 |
| | - Hifax CA 60 A | - 33 |
| T3 | - Borsoft^{™} SF203 CF | - 100 |
| T4 | - Borsoft^{™} SF203 CF | - 80 |
| | - Elvaloy^{®} 2715 AC | - 20 |
| T5 | - Borsoft^{M} SF203 CF | - 90 |
| | - polybutène-1 DP 8510 | - 10 |

On a, par ailleurs, préparé 3 tubes selon l'invention E1 à E3, qui présentent tous une soudure identique à celle des échantillons T1 à T5, et qui sont réalisés en un matériau thermoplastique selon l'invention, dont la composition pondérale est indiquée dans le tableau 2 :

**Tableau 2**

| | **Composition** | |
|---|---|---|
| **échantillons** | **produits** | **Quantité (%)** |
| E1 | - Borsoft^{™} SF203CF | - 80 |
| | - Adsyl 5C30CF | - 20 |
| E2 | - Borsoft^{™} SF203CF | - 80 |
| | - Borseal^{™} TD218BF | - 20 |
| E3 | - Borsoft^{™} SF203CF | - 53,6 |
| | - Hifax CA 60 A | - 26,4 |
| | - Adsyl | - 20 |

Les tubes T1 à T5 et E1 à E3 sont formés par moulage selon le procédé de l'injection. Ils sont ensuite soudés, sur une machine de production équipée du procédé dit « buse à air chaud », commercialisé par les sociétés Kalix ou Norden. L'étanchéité des tubes a été préalablement garantie par bouchage de leur orifice.

On réalise sur les échantillons T1 à T5 et E1 à E3 un test de tenue de la soudure.

Ce test consiste à soumettre la soudure d'un tube à une pression interne variant de 2 à 5 bars (± 0,2 bars) pendant 10 secondes (± 1 seconde), afin de déterminer, pour chacun des produits testés, si la soudure résiste ou non à la pression exercée. Si la soudure résiste à la pression exercée, on indique « oui » dans le tableau 3 présentant les résultats de ce test. Sinon, on indique « non » (voir ci-après dans le paragraphe relatif aux résultats).

On utilise pour réaliser ce test un appareillage commercialisé par la société JACOMEX, sous la dénomination commerciale « appareil écraseur de tubes ».

### • Résultats :

Le comportement des échantillons T1 à T5 et E1 à E3 lors du test de tenue de la soudure a été évalué pour des pressions allant 2 à 5 bars, pendant une durée de 10 secondes.

Les résultats seront présentés dans le tableau 3.

**Tableau 3**

| Echantillons | Pression | | | |
|---|---|---|---|---|
| | 2 bars | 3 bars | 3,5 bars | 4 bars |
| T1 | OUI | OUI | NON TESTE | OUI |
| T2 | OUI | NON | NON | NON |
| T3 | OUI | NON | NON TESTE | NON |
| T4 | NON | NON | NON TESTE | NON |
| T5 | OUI | NON | NON TESTE | NON |
| E1 | OUI | OUI | NON TESTE | OUI |
| E2 | OUI | OUI | NON TESTE | NON TESTE |
| E3 | NON TESTE | NON TESTE | OUI | NON TESTE |

Ces résultats montrent que la soudure des échantillons selon l'invention (E1, E2 et E3) résiste à une pression de 3 bars, comme c'est le cas pour les échantillons en polyéthylène pur (T1) qui est le matériau de référence par excellence en terme de qualité de tenue de la soudure (résistance à la pression).

Lorsque les tubes ne sont pas réalisés en un matériau thermoplastique selon l'invention, la soudure ne résiste pas à une pression de 3 bars (T2, T3 et T5), voire moins (2 bars pour T4).

## Revendications

1. Matériau thermoplastique utilisable pour la fabrication par injection de tubes souples présentant au moins une soudure, ce matériau étant constitué d'au moins d'un polymère hétérophasique, présentant un module de flexion de 100 à 600 MPa selon la norme ISO 178, comprenant une matrice polymère à base d'un polypropylène et/ou d'un copolymère du propylène, et des nodules de caoutchouc d'éthylène-propylène, **caractérisé en ce qu'**il comprend en outre un copolymère de propylène et de butène, et optionnellement d'une autre α-oléfine en C₂-C₈.

2. Matériau thermoplastique selon la revendication 1, **caractérisé en ce que** le copolymère du propylène et du butène est un terpolymère du propylène-éthylène-butène.

3. Matériau thermoplastique selon la revendication 1 ou 2, **caractérisé en ce que** le copolymère de propylène et de butène représente de 10 % à 50 % en poids du matériau thermoplastique.

4. Matériau thermoplastique selon la revendication 3, **caractérisé en ce que** copolymère de propylène et de butène représente 15 à 33 % en poids du matériau thermoplastique.

5. Matériau thermoplastique selon l'une quelconque des revendications précédentes, **caractérisé en ce qu'**il comprend un mélange de deux polymères hétérophasique étant constitué chacun d'une matrice polymère à base de polypropylène et/ou un copolymère du propylène, et des nodules de caoutchouc d'éthylène-propylène :
- le premier polymère hétérophasique présentant un module de flexion d'au moins 300 MPa,
- le deuxième polymère hétérophasique présentant un module de flexion de 70 Pa à 100 MPa,
les modules de flexion étant déterminés selon la norme ISO 178.

6. Matériau thermoplastique selon l'une quelconque des revendications précédentes, **caractérisé en ce que** :
- le premier polymère hétérophasique représente 40 à 80 % en poids du matériau thermoplastique, et
- le deuxième polymère hétérophasique représente 0 à 40 % en poids du matériau thermoplastique.

7. Tube souple réalisé en un matériau thermoplastique tel que défini selon l'une quelconque des revendications 1 à 6.

## Patentansprüche

1. Thermoplastisches Material, das zur Spritzgussfertigung von flexiblen Rohren verwendet werden kann, die zumindest eine Schweißnaht aufweisen, wobei dieses Material zumindest aus einem heterophasischen Polymer gebildet wird, mit einem Biegemodul von 100 bis 600 MPa laut der Norm ISO 178, eine Polymermatrix basierend auf einem Polypropylen und/ oder einem Propylen-Copolymer umfassend, und Knötchen aus Ethylen-Propylen-Kautschuk, **dadurch gekennzeichnet, dass** es darüber hinaus ein Propylen- und Buten-Copolymer, und optional eines anderen C₂-C₈ α-Olefins umfasst.

2. Thermoplastisches Material nach Anspruch 1, **dadurch gekennzeichnet, dass** das Propylen- und Buten-Copolymer ein Terpolymer vom Propylen-Ethylen-Buten ist.

3. Thermoplastisches Material nach Anspruch 1 oder 2, **dadurch gekennzeichnet, dass** das Propylen- und Buten-Copolymer 10 bis 50 Gew.% des thermoplastischen Materials darstellt.

4. Thermoplastisches Material nach Anspruch 3, **dadurch gekennzeichnet, dass** das Propylen- und Buten-Copolymer 15 bis 33 Gew.% des thermoplastischen Materials darstellt.

5. Thermoplastisches Material nach irgendeinem der vorherigen Ansprüche, **dadurch gekennzeichnet, dass** es eine Mischung aus zwei heterophasischen Polymeren umfasst, die jeweils aus einer Polymermatrix basierend auf Polypropylen und/ oder einem Propylen-Copolymer und aus den Knötchen aus Ethylen-Propylen-Kautschuk gebildet werden, wobei:
- das erste heterophasische Polymer ein Biegemodul von zumindest 300 MPa aufweist,
- das zweite heterophasische Polymer ein Biegemodul von 70 Pa bis 100 MPa aufweist,
wobei die Biegemodule gemäß der Norm ISO 178 bestimmt werden.

6. Thermoplastisches Material nach irgendeinem der vorherigen Ansprüche, **dadurch gekennzeichnet, dass**:
- das erste heterophasische Polymer 40 bis 80 Gew.% des thermoplastischen Materials darstellt, und
- das zweite heterophasische Polymer 0 bis 40 Gew.% des thermoplastischen Materials darstellt.

7. Flexibles Rohr, das aus einem thermoplastischen Material nach irgendeinem der Ansprüche 1 bis 6 hergestellt wird.

## Claims

1. Thermoplastic material capable of being used to manufacture flexible tubes by injection, said flexible tubes having at least one weld, this material being comprised from at least one heterophasic polymer, having a flexural modulus from 100 to 600 MPa according to the standard ISO 178, including a polymer matrix with a polypropylene and/or propylene copolymer base, and ethylene-propylene rubber nodules, **characterised in that** it further comprises a propylene and butene copolymer, and optionally another C₂-C₈ alpha-olefin copolymer.

2. Thermoplastic material according to claim 1, **characterised in that** the propylene and butene copolymer is a propylene-ethylene-butene terpolymer.

3. Thermoplastic material according to claim 1 or 2, **characterised in that** said thermoplastic material is comprised of 10% to 50% by weight of the propylene and butene copolymer.

4. Thermoplastic material according to claim 3, **characterised in that** said thermoplastic material is comprised of 15% to 33% by weight of the propylene and butene copolymer.

5. Thermoplastic material according to any one of the previous claims, **characterised in that** it comprises a mixture of two heterophasic polymers, each being constituted from a polymer matrix with a polypropylene and/or propylene copolymer base, and ethylene-propylene rubber nodules:
- the first heterophasic polymer having a flexural modulus of at least 300 MPa,
- the second heterophasic polymer having a flexural modulus from 70 Pa to 100 MPa,
the flexural moduli being determined according to the standard ISO 178.

6. Thermoplastic material according to any one of the previous claims, **characterised in that**:
- said thermoplastic material is comprised of 40 to 80% by weight of the first heterophasic polymer, and
- said thermoplastic material is comprised of 0 to 40% by weight of the second heterophasic polymer.

7. Flexible tube made from a thermoplastic material as defined according to any one of claims 1 to 6.
